# EUROPEAN PATENT SPECIFICATION

(11) **EP 1 896 949 B1**
(45) Date of publication and mention of the grant of the patent: **07.04.2021**
(21) Application number: 05770197.1
(22) Date of filing: 30.06.2005
(51) Int. Cl.: G06F 11/30, G21C 17/00, G06Q 10/06, G05B 23/02, G06Q 10/00, G07C 5/00

(54) **METHOD AND TOOL FOR OPTIMIZED SYSTEM MAINTENANCE**
VERFAHREN UND WERKZEUG ZUR OPTIMIERTEN SYSTEMWARTUNG
PROCÉDÉ ET INSTRUMENT DE MAINTENANCE DE SYSTÈME OPTIMISÉE

(43) Date of publication of application: 12.03.2008
(73) Proprietor: Siemens Aktiengesellschaft, 80333 München (DE)
(72) Inventor: GROSS, Wolfgang, 91058 Erlangen (DE); KERL, Bernd, 90431 Nurnberg (DE)
(74) Representative: Maier, Daniel Oliver
(86) International application number: PCT/US2005/023087
(87) International publication number: WO 2007/005002

(56) References cited:
- EP-A1- 1 544 771
- US-A- 5 970 437
- US-A- 6 006 171
- US-A- 6 141 629
- US-A- 6 141 629
- US-A1- 2001 032 103
- US-A1- 2003 095 038
- US-A1- 2003 150 908
- US-A1- 2004 073 468
- US-A1- 2004 073 468
- US-A1- 2005 143 956
- US-B2- 6 816 815
- US-B2- 6 925 418

## Description

### Technical Field

The present application relates to automation systems and in particular to the optimized maintenance of such a system.

### Background of the Invention

In modern factories or plants, engineering systems are provided to define processing steps in manufacturing and/or controlling certain process steps within the system: To this end, these engineering systems usually comprise a plurality of mechanical and/or electrical components, such as process technology field devices, control devices, drives, sensors, microprocessors, personal computers, software, etc. Each component often consists of hardware and software/firmware, additional aids for configuration, parameterization, and diagnosis, as well as information for operating and maintaining the component. Such information is provided by the specific vendor of the component or if the component is designed in house, by the specific engineering team.

System manufacturers combine these components provided by specific vendors if necessary with their own components to design and build complex automation systems. The operator of such a designed system relies on the specific information provided by the system manufacturer and vendors to perform the required steps for maintaining the system operable. The most critical factor in operating automation systems is down time due to failure of a component. Therefore, maintaining the system operable is one of the most important tasks of a system operator. Specific maintenance teams monitor the system and repair specific components in case of a system failure. However, to keep down time at a minimum, preventive maintenance is required. Thus, failure can be avoided by exchanging specific parts according to a maintenance plan or scheme. Such a scheme or plan is simply defined according to the information provided by the system designer or vendor of a component which informs, for example, how often a specific part should be replaced. EP1544771 discloses a diagnosis engine that refers to a risk assessment database and antirisk measure database, and calculates along the time sequence a risk estimate amount in case of failure for each device and a maintenance cost in executing a measure method in advance, and then adds the risk estimate amount and maintenance cost along the time sequence to calculate an optimum maintenance period of the device. US2004/07468 discloses a fleet management system that manages a plurality of machines, having a fleet manager that includes a communication conduit coupled to the machines for receiving status information related to the machines and a repository coupled to the communication conduit for receiving and storing the status information. US6141629 discloses that the maintenance due times of components of a machine are determined according to the status of user-performed in-house maintenance and according to the occurrence of abnormalities during machine operation.

Nevertheless, many factors influence the operability of specific parts of a complex system. Thus, a maintenance scheme/plan as described above is far from being optimized and does not take specific influencing factors into account. For example, prescribed maintenance intervals might be too long or too short due to the specific design of the system or specific usage of devices. Hence, either avoidable system failure or unnecessary maintenance may occur, thus, increasing operating costs of the respective system.

### Summary of the Invention

A method for maintaining a system consisting of a plurality of components, according to an exemplary embodiment of the invention comprises the steps of collecting maintenance information for each component of the system for which maintenance information is available; providing a maintenance schedule for components of the system; operating the system; and maintaining the system wherein during scheduled maintenance of a component information about the status of that component is acquired, during a failure of a component information about the failure of that component is acquired, and modifying the maintenance schedule according to the acquired information, wherein the method further comprises a step of determining information about an interrelationship of components; comprising the respective inherent properties of each component as well as their particular placement within the system, specific environmental influences created either by the location or by adjoining components and specific mechanical and/or electrical influences of certain components on other components.

The method may further comprise the step of determining maintenance information for components of the system for which no maintenance information is available. The information acquired during a scheduled maintenance may indicate that a service interval is too long, correct,or too short. The step of modifying may include the step of adjusting the service interval. The method further may comprise the step of determining information about environmental conditions of a location of at least one component. The method may further comprise the step of providing feedback information for a system designer. The method may further comprise the step of providing feedback information for a component manufacturer. The feedback information can be automatically generated via an electronic messaging system.

A system for optimizing system maintenance according to another exemplary embodiment comprises a plurality of components; a data network coupling the plurality of components; and a maintenance unit for collecting and processing information generated during normal processing as well as during maintenance of components of the system according to a predefined maintenance schedule, wherein the predefined maintenance schedule is modified by the maintenance tool according to the processed information, wherein the information comprises information about an interrelationship of components, comprising the respective inherent properties of each component as well as their particular placement within the system, specific environmental influences created either by the location or by adjoining components and specific mechanical and/or electrical influences of certain components on other components.

The information may include maintenance information and/or normal processing information. Each component may comprise a memory unit for storing the maintenance information. The memory unit may store information for the component itself and for subordinated components. The system may further comprise means for generating electronic messages including the collected maintenance information and for providing a vendor and/or system designer with the electronic message. The system may further comprise sensors for sensing environmental conditions of a component. At least one component can be provided by an external vendor or component manufacturer. The information acquired during a scheduled maintenance may indicate any kind of deviation from a predefined status.

### Brief Description of the Drawings

Fig. 1 shows an exemplary automation system according to the prior art;
Fig. 2 shows a first exemplary flow chart of a system design and operation according to the present invention;
**Fig. 3** shows an exemplary embodiment of an automation system according to the present invention;
**Fig. 4** shows a second exemplary flow chart of a system design and operation according to the present invention.

### Detailed Description of the Preferred Embodiments

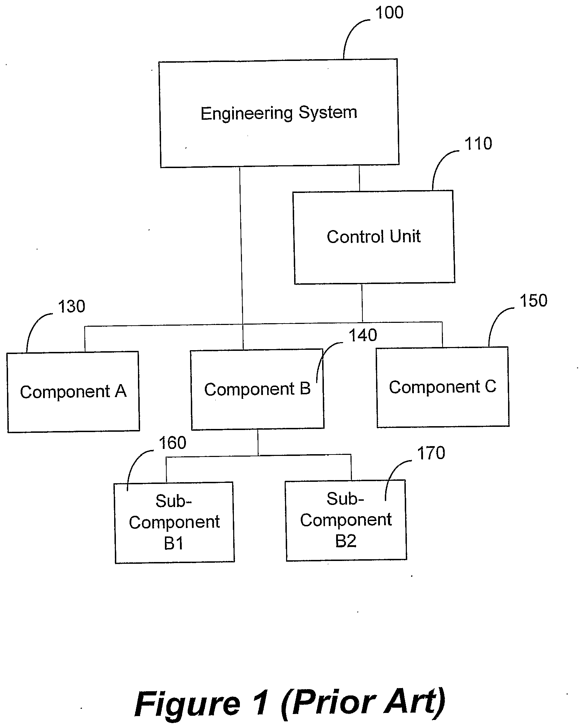

Fig. 1 shows a conventional automation system consisting of an engineering system 100 coupled with a control unit 110 and a plurality of components 130-170, for example as shown component A, B, C. In this exemplary system, component B further comprises sub-components B1 and B2. Each component 130 - 170 might be provided by a different vendor and might comprise specific performance characteristics. Each vendor might recommend a certain maintenance plan and depending on the type of component a certain replacement schedule for specific parts, for example, wear and tear elements. The respective maintenance personnel will, thus, follow these instructions regardless of the overall characteristics of the entire system. Thus, certain maintenance services could be performed too late or too early. In addition, no feedback will generally be provided to the vendor or system designer. The maintenance personnel might at most adjust the maintenance schedule for the specific part. Nevertheless, any influence of the specific part and its specific needs on the entire system will be completely neglected.

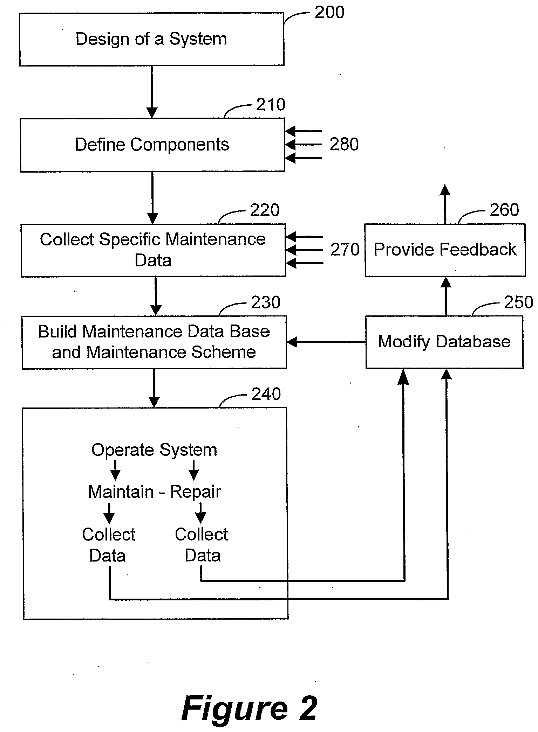

Thus, according to the present invention, a new approach for an improved method and tool for optimized maintenance is proposed. For example, Fig. 2 shows a flow chart of specific steps in the design and operation of a system consisting of a plurality of independent and/or dependent components. In a first step 200, the manufacturer of, for example, an automation system, designs the system using a plurality of, e.g., standard components, customized standard components, and/or specifically designed components. In step 210, these components and their specific properties are defined using, if necessary, external information, for example, provided by the respective vendor as indicated with arrows 280. According to this information, once the overall system is designed, a specific maintenance schedule/plan is defined in the following steps 220 and 230. To this end, specific information about each component is collected in step 220 using, for example, external information about specific properties, wear and tear of each component, and recommended maintenance intervals and other maintenance data as indicated by arrows 270. If no information is available, then the operator/user may define a custom maintenance schedule/plan if the respective component requires maintenance. In step 230, these data are stored in a custom maintenance data base and used to design a custom maintenance scheme/plan taking into consideration the respective inherent properties of each component as well as their particular placement within the system. Thus, for example, specific environmental influences created either by the location or by adjoining components can be taken into account. Furthermore, specific mechanical and/or electrical influences of certain components on other components can also be considered. Thus, any influence by any component as well as specific influences of a component location on its performance can be taken into account.

However, many other factors might not been known at the time of the design. Thus, as shown in step 240, during operation of the system, certain maintenance services and/or repair services will be performed. Each service, whether maintenance or repair, will provide the respective personnel with additional data about the respective task which has been performed. For example, a scheduled maintenance service might require a replacement of a wear and tear part. For example, a valve might require replacement after 10,000 cycles. However, the exchange of this part might show, that the respective part does not show the anticipated wear and replacement was too early. Also, a unscheduled repair service will provide information of, for example, a higher wear and tear of a specific part than anticipated, for example, the valve might show significant damage after only 8,000 cycles. Also other components might show measurable wear and tear. For example, a electrically operated brake needs maintenance after 5,000 activations according to the vendor. However, the service might show only 50% wear and tear. Additional influencing factors might be discovered due to specific types of failures, such as, over heating, additional mechanical stress factors, etc. In particular, due to the specific maintenance/repair service, the respective personnel might be able to deduct certain cross-influential factors which have not been considered during the design phase. This information can now be used by a maintenance tool in step 250 to modify the data base and the maintenance chedule/plan. Thus, an adaptive process takes place during which an optimized customary maintenance schedule/plan can be developed. Furthermore, the respective data base can also be used to generate information about certain cross-influential factors created by the combination of two or more components that are linked in specific ways. Thus, whenever certain combinations of components are used in a new design, these specific cross-influential factors can be taking into account.

A maintenance service might provide predefined information that can be forwarded automatically or manual to the maintenance tool. For example, the following choices might be available for the service personnel:
- Maintenance service was performed to late (component failure occurred)
- Maintenance service was absolutely necessary
- Maintenance service was necessary
- Maintenance service could have been performed later (optional : include time interval)
- Maintenance service was unnecessary

The maintenance service might further provide information about an improved maintenance service plan, recommendations to the vendor, and any actual data about the specific component/part. This information can be directly forwarded to the maintenance tool and in addition, this information can be directly stored in the respective component if the component provides for such a storage feature.

The combination of certain components and their respective effect on the overall system and on specific components can also be generated. For example, using component A in a specific combination with component B might result in 10 % increase of wear and tear of part X, whereas a combination of component B and C might decrease a mechanical stress on a specific part Y in component B. Furthermore, environmental factors such as temperature, humidity, pressure, etc. might have positive or negative influence on the performance of certain parts which might not be known or provided by a vendor. Also, a combination of components and environmental conditions might cause certain effects on the overall or specific performance of certain components or parts. All these information can be collected in step 250 during the operation of the system and be used to improve the performance of the system and keep the down time of the system at a minimum.

Fig. 2 also shows an additional optional step 260 of providing feedback. In this step, the above described specific information can be forwarded to the respective vendors and/or to the designers of the system. This should not be an automatic action without influence of the maintenance personnel to avoid that proprietary information is sent to a vendor. Some of this feedback information can be generated automatically and, for example, be provided to the vendor via email, SMS, in form of a letter, or any other suitable communication form. Thus, the method and tool for optimizing the maintenance service allows not only for improving the respective automation system but also to provide vendors with specific data which can be either used to inform other customers about specific properties of the component or their parts or to improve the respective parts of the components or to improve the recommended maintenance plans for a component. Furthermore, the basic knowledge about specific components can be improved and adapted to allow a better design of new systems. The feedback may comprise, for example, identification and maintenance data of the specific component which can be vendor- or system-specific, maintenance plan recommended by the vendor, application information, and experience of the user/maintenance personnel.

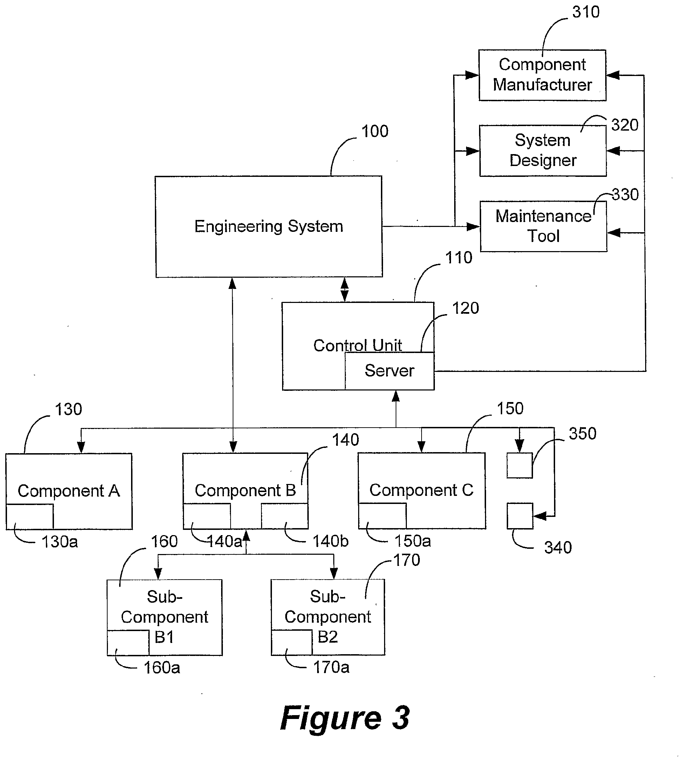

Fig. 3 shows how operator, designer, and vendor of an automation system can benefit from the optimized maintenance tool and method according to the present invention. In Fig. 3, the same system as shown in Fig. 1 is improved by a maintenance tool 330 as described in Fig. 2. To this end, for example, a server 120 is integrated into the control unit 110 and is coupled with the maintenance tool 330. A network couples all components 130-170 with the engineering system 100 and/or the server 120. Furthermore, each component may comprise a memory unit 130a, 140a, 150a, 160a, and 170a for storing the respective maintenance data developed during operation of the system. In particular components with sub-components, such as, component 140 may comprise an additional memory unit 140b which contains the information of memory units 160a and 170a of sub-components 160 and 170. The server 120 may forward the acquired data to the maintenance tool 330 which processes these data as described above. Furthermore, the server 120 may forward the same or specifically selected data to the component manufacturer/vendor and the system designer. To this end specific filters can be implemented to provide the respective parties with only suitable data. Furthermore, or alternatively the engineering system can provide the information about the components for example, via Internet, directly to the maintenance tool 330, the component manufacturer/vendor 310, and the system designer 320. Also, certain environmental characteristics of the specific location or specific measurable parameters of a component can be directly measured. Component 150 in Fig. 3, for example, is equipped with two sensors 340 and 350 which are coupled with the network to provide the respective data. These sensors may measure, temperature, pressure, stress, etc.

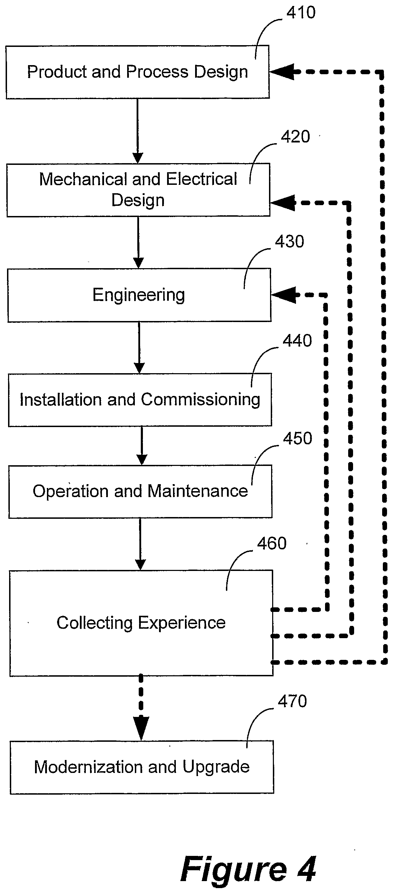

Fig. 4 shows the generally different influences of the optimized maintenance tool and method on different stages of the development of an automation system. A simplified flow chart as shown in Fig. 4 shows, for example, a first step 410 in which the product or process is designed. In the following step 420, the specific mechanical and electrical designs are made. Engineering takes place in the following step 430. After installation and commissioning in step 440, the system is operated and maintained in step 450. This leads to the step 460 of collecting experience as described above in the specific embodiments. The dotted arrows show which steps in this process, in particular for future developments can be influenced by such a method. The acquired experience leads to information and data that might improve the different design phases in step 410 - 430 as well as in the improvement of an existing system, for example, as shown with step 470 indicating modernization and upgrade of an existing system.

## Claims

1. A method for maintaining a system (100) consisting of a plurality of components (130 - 170), comprising the steps of:
- collecting maintenance information for each component (130 - 170) of the system (100) for which maintenance information is available;
- providing a maintenance schedule for components (130 - 170) of the system (100);
- operating said system (100); and
- maintaining said system (100) wherein:
- during scheduled maintenance of a component (130
- 170) information about the status of that component (130 - 170) is acquired;
- during a failure of a component (130 - 170) information about the failure of that component (130 - 170) is acquired; and
- modifying the maintenance schedule according to the acquired information, **characterized in that** the method further comprises a step of determining information about interrelationship of components (130 - 170) comprising the respective inherent properties of each component as well as their particular placement within the system, specific environmental influences created either by the location or by adjoining components and specific mechanical and/or electrical influences of certain components on other components.

2. The method according to claim 1, further comprising the step of determining maintenance information for components (130 - 170) of the system (100) for which no maintenance information is available.

3. The method according to claim 1, wherein the information acquired during a scheduled maintenance indicates that a service interval is too long, correct, or too short.

4. The method according to claim 3, wherein the step of modifying includes the step of adjusting said service interval.

5. The method according to claim 1, further comprising the step of determining information about environmental conditions of a location of at least one component (130 - 170) .

6. The method according to claim 1, further comprising the step of providing feedback information for a system designer.

7. The method according to claim 1, further comprising the step of providing feedback information for a vendor or component manufacturer.

8. The method according to claim 6, wherein the feedback information is automatically generated via an electronic messaging system.

9. The method according to claim 1, wherein at least one component is provided by an external vendor or component manufacturer.

10. The method according to claim 1, wherein the information acquired during a scheduled maintenance indicates any kind of deviation from a predefined status.

11. An apparatus for system maintenance comprising:
- a plurality of components (130 - 170);
- a data network coupling the plurality of components (130 - 170);
- a maintenance unit (110) adapted to collect and process information generated during normal processing as well as during maintenance of the plurality of components (130 - 170) of the system according to a predefined maintenance schedule, wherein the predefined maintenance schedule is modified by the maintenance unit (110) according to the processed information, and wherein the information comprises information about an interrelationship of the plurality of components (130 - 170) comprising the respective inherent properties of each component as well as their particular placement within the system, specific environmental influences created either by the location or by adjoining components and specific mechanical and/or electrical influences of certain components on other components.

12. The apparatus according to claim 11, wherein the information includes maintenance information and/or normal processing information.

13. The apparatus according to claim 11, wherein each component (130 - 170) comprises a memory unit (130a - 170a) for storing said maintenance information.

14. The apparatus according to claim 13, wherein the memory unit (130a - 170a) stores information for the component (130 - 170) itself and for subordinated components (140b).

15. The apparatus according to claim 11, further comprising means for generating electronic messages including said collected maintenance information and for providing a vendor and/or system designer with said electronic message.

16. The apparatus according to claim 11, further comprising sensors (340, 350) for sensing environmental conditions of a component (130 - 170).

## Patentansprüche

1. Verfahren zum Warten eines Systems (100), das aus mehreren Komponenten (130 bis 170) besteht, mit folgenden Schritten:
- Sammeln von Wartungsinformationen für jede Komponente (130 bis 170) des Systems (100), für die Wartungsinformationen zur Verfügung stehen,
- Bereitstellen eines Wartungszeitplans für Komponenten (130 bis 170) des Systems (100),
- Betreiben des Systems (100) und
- Warten des Systems (100), wobei:
- bei einer geplanten Wartung einer Komponente (130 bis 170) Informationen zum Zustand dieser Komponente (130 bis 170) gewonnen werden,
- bei einem Ausfall einer Komponente (130 bis 170) Informationen zum Ausfall dieser Komponente (130 bis 170) gewonnen werden und
- Ändern des Wartungszeitplans entsprechend den gewonnenen Informationen, **dadurch gekennzeichnet, dass** das Verfahren ferner das Ermitteln von Informationen zu einer Wechselbeziehung zwischen Komponenten (130 bis 170) umfasst, die die jeweiligen inhärenten Eigenschaften jeder Komponente sowie deren konkrete Anordnung im System, bestimmte Umwelteinflüsse, die durch die Lage oder benachbarte Komponenten entstehen, und bestimmte mechanische und/oder elektrische Einflüsse bestimmter Komponenten auf andere Komponenten umfasst.

2. Verfahren nach Anspruch 1, das ferner das Ermitteln von Wartungsinformationen für Komponenten (130 bis 170) des Systems (100) umfasst, für die keine Wartungsinformationen zur Verfügung stehen.

3. Verfahren nach Anspruch 1, wobei die bei einer geplanten Wartung gewonnenen Informationen angeben, dass ein Wartungsintervall zu lang, genau richtig oder zu kurz ist.

4. Verfahren nach Anspruch 3, wobei das Ändern das Anpassen des Wartungsintervalls umfasst.

5. Verfahren nach Anspruch 1, das ferner das Ermitteln von Informationen zu Umgebungsbedingungen für eine Lage der mindestens einen Komponente (130 bis 170) umfasst.

6. Verfahren nach Anspruch 1, das ferner das Bereitstellen von Rückmeldungsinformationen für einen Systementwickler umfasst.

7. Verfahren nach Anspruch 1, das ferner das Bereitstellen von Rückmeldungsinformationen für einen Anbieter oder Komponentenhersteller umfasst.

8. Verfahren nach Anspruch 6, wobei die Rückmeldungsinformationen über ein elektronisches Nachrichtensystem automatisch erzeugt werden.

9. Verfahren nach Anspruch 1, wobei mindestens eine Komponente von einem externen Anbieter oder Komponentenhersteller bereitgestellt wird.

10. Verfahren nach Anspruch 1, wobei die bei einer geplanten Wartung gewonnenen Informationen jede Art Abweichung von einem vorgegebenen Zustand angeben.

11. Vorrichtung für die Systemwartung mit Folgendem:
- mehreren Komponenten (130 bis 170),
- einem Datennetzwerk, das die mehreren Komponenten (130 bis 170) verbindet,
- einer Wartungseinheit (110), die so ausgelegt ist, dass sie gemäß einem vorgegebenen Wartungszeitplan Informationen sammelt und verarbeitet, die bei normaler Verarbeitung sowie bei einer Wartung der mehreren Komponenten (130 bis 170) des Systems erzeugt werden, wobei der vorgegebene Wartungszeitplan von der Wartungseinheit (110) den verarbeiteten Informationen entsprechend geändert wird und die Informationen Informationen zu einer Wechselbeziehung der mehreren Komponenten (130 bis 170) umfassen, die die jeweiligen inhärenten Eigenschaften jeder Komponente sowie deren konkrete Anordnung im System, bestimmte Umwelteinflüsse, die durch die Lage oder benachbarte Komponenten entstehen, und bestimmte mechanische und/oder elektrische Einflüsse bestimmter Komponenten auf andere Komponenten umfasst.

12. Vorrichtung nach Anspruch 11, wobei die Informationen Wartungsinformationen und/oder normale Verarbeitungsinformationen umfassen.

13. Vorrichtung nach Anspruch 11, wobei jede Komponente (130 bis 170) eine Speichereinheit (130a bis 170a) zum Speichern der Wartungsinformationen umfasst.

14. Vorrichtung nach Anspruch 13, wobei die Speichereinheit (130a bis 170a) Informationen für die Komponente (130 bis 170) selbst und für untergeordnete Komponenten (140b) speichert.

15. Vorrichtung nach Anspruch 11, die ferner Mittel zum Erzeugen von elektronischen Nachrichten, die die gesammelten Wartungsinformationen enthalten, und zum Bereitstellen der elektronischen Nachricht für einen Anbieter und/oder einen Systementwickler umfasst.

16. Vorrichtung nach Anspruch 11, die ferner Sensoren (340, 350) zum Erfassen von Umgebungsbedingungen einer Komponente (130 bis 170) umfasst.

## Revendications

1. Procédé de maintenance d'un système (100) constitué d'une pluralité de composants (130-170), comprenant les étapes consistant :
- à collecter des informations de maintenance pour chaque composant (130-170) du système (100) pour lequel des informations de maintenance sont disponibles ;
- à fournir un calendrier de maintenance pour les composants (130-170) du système (100) ;
- à faire fonctionner ledit système (100), et
- à entretenir ledit système (100) étant entendu :
- que, pendant la maintenance périodique d'un composant (130-170), des informations sur l'état de ce composant (130-170) sont acquises ;
- que, pendant une panne d'un composant (130-170), des informations sur la panne de ce composant (130-170) sont acquises, et
- à modifier le calendrier de maintenance conformément aux informations acquises, **caractérisé en ce que** le procédé comprend par ailleurs une étape consistant à déterminer des informations sur l'interrelation des composants (130-170), comprenant les propriétés inhérentes respectives de chaque composant, ainsi que leur placement particulier au sein du système, les influences environnementales spécifiques créées soit par l'emplacement, soit par des composants avoisinants, et les influences mécaniques et/ou électriques spécifiques de certains composants sur d'autres composants.

2. Procédé selon la revendication 1, comprenant par ailleurs l'étape consistant à déterminer des informations de maintenance pour les composants (130-170) du système (100) pour lesquels aucune information de maintenance n'est disponible.

3. Procédé selon la revendication 1, étant entendu que les informations acquises pendant une maintenance périodique indiquent qu'un intervalle de service est trop long, correct ou trop court.

4. Procédé selon la revendication 3, étant entendu que l'étape de modification inclut l'étape consistant à ajuster ledit intervalle de service.

5. Procédé selon la revendication 1, comprenant par ailleurs l'étape consistant à déterminer des informations sur les conditions environnementales d'un emplacement d'au moins un composant (130-170).

6. Procédé selon la revendication 1, comprenant par ailleurs l'étape consistant à fournir des informations en retour pour un concepteur de systèmes.

7. Procédé selon la revendication 1, comprenant par ailleurs l'étape consistant à fournir des informations en retour pour un fournisseur ou un fabricant de composants.

8. Procédé selon la revendication 6, étant entendu que les informations en retour sont produites automatiquement par le biais d'un système de messagerie électronique.

9. Procédé selon la revendication 1, étant entendu qu'au moins un composant est fourni par un fournisseur ou fabricant de composants externe.

10. Procédé selon la revendication 1, étant entendu que les informations acquises pendant une maintenance périodique indiquent un type quelconque d'écart par rapport à un état prédéfini.

11. Appareil pour la maintenance d'un système, comprenant :
- une pluralité de composants (130-170) ;
- un réseau de transmission de données reliant la pluralité de composants (130-170) ;
- une unité de maintenance (110) adaptée en vue de collecter et de traiter des informations produites tant pendant le traitement normal que pendant la maintenance de la pluralité de composants (130-170) du système conformément à un calendrier de maintenance prédéfini, étant entendu que le calendrier de maintenance prédéfini est modifié par l'unité de maintenance (110) conformément aux informations traitées, et étant entendu que les informations comprennent des informations sur une interrelation de la pluralité de composants (130-170) comprenant les propriétés inhérentes respectives de chaque composant, ainsi que leur placement particulier au sein du système, les influences environnementales spécifiques créées soit par l'emplacement, soit par des composants avoisinants, et les influences mécaniques et/ou électriques spécifiques de certains composants sur d'autres composants.

12. Appareil selon la revendication 11, étant entendu que les informations comprennent des informations de maintenance et/ou des informations de traitement normal.

13. Appareil selon la revendication 11, étant entendu que chaque composant (130-170) comprend une unité mémoire (130a-170a) servant à stocker lesdites informations de maintenance.

14. Appareil selon la revendication 13, étant entendu que l'unité mémoire (130a-170a) stocke les informations pour le composant (130-170) lui-même et pour les composants subordonnés (140b).

15. Appareil selon la revendication 11, comprenant par ailleurs des moyens pour produire des messages électroniques incluant lesdites informations de maintenance collectées et pour fournir ledit message électronique à un fournisseur et/ou à un concepteur de systèmes.

16. Appareil selon la revendication 11, comprenant par ailleurs des capteurs (340, 350) pour détecter les conditions environnementales d'un composant (130-170).
